# EUROPEAN PATENT SPECIFICATION

(11) **EP 1 344 214 B1**
(45) Date of publication and mention of the grant of the patent: **13.04.2005**
(21) Application number: 01271628.8
(22) Date of filing: 10.12.2001
(51) Int. Cl.: G11B 7/085

(54) **POSITION REGULATION BY MEANS OF TRACK COUNT**
POSITIONSREGULIERUNG MITTELS EINES SPURZÄHLWERKS
REGLAGE DE POSITION PAR COMPTAGE DES PISTES

(30) Priority: 21.12.2000 DE 10064051
(43) Date of publication of application: 17.09.2003
(73) Proprietor: Thomson Licensing S.A., 92100 Boulogne-Billancourt (FR)
(72) Inventor: BÜCHLER, Christian, 78052 Villingen-Schwenningen (DE)
(74) Representative: Thies, Stephan
(86) International application number: PCT/EP2001/014459
(87) International publication number: WO 2002/050823

(56) References cited:
- US-A- 4 866 687
- US-A- 5 361 245

## Description

The present invention relates to a method and an apparatus for position regulation of a scanning beam relative to a track of an optical data carrier.

An apparatus for writing to and/or reading from an optical data carrier has an optical scanner whose scanning beam can be moved by an objective lens with regard to its position with respect to tracks provided on an optical medium. During scanning, the scanning beam of the optical scanner is stabilized by regulation. Furthermore, targeted track jumps are performed.

For the stabilization of the objective lens, suspended in an actuator, with regard to the optical axis of the scanning system, known solutions provide regulation with the aid of error signals which are obtained from lens position detectors which are provided in the optical scanner or provided externally. Furthermore, it is known to carry out a track jump by acceleration and deceleration of the actuator with the aid of temporally predetermined pulses and by counting down tracks crossed. In this case, however, the instantaneous position of the scanning beam with regard to the tracks is not considered. The disadvantage in this case is that in the presence of an eccentric optical medium, and simultaneous regulation of the position of the objective lens with regard to the optical axis of the scanning system, that is to say with the track regulating circuit open, comparatively high relative speeds between track and scanning beam can occur on account of the eccentricity of the disc or data carrier and the ever increasing scanning rotational speeds of the storage media.

With regard to the track jump, in conventional methods, the track regulating circuit is opened before a jump and the actuator is thereupon accelerated in the direction of the destination track by means of predetermined pulses of predetermined length and is decelerated before reaching the destination track by means of oppositely directed pulses. In the presence of an eccentric disc, however, the relative speed of the actuator with regard to the tracks changes in a manner dependent on the angle of rotation of the disc. The jump destination can thus be missed.

US-A-4866687 describes an optical disk storage access method using a coarse movement mechanism, a cross-track seek operation, and a tracking operation. First, the number of tracks is determined from a linear encoder, and in cross-track seek control, actuator speed is detected.

A further source of disturbances which increase the relative speed between tracks and scanner are external forces which cause the actuator to move, e.g. external forces on the suspension of the drive or imbalances of the disc which cause the drive and thus the actuator to oscillate. Although actuator position regulation with regard to the optical axis of the optical scanner can reduce the movement of the actuator in the case of externally acting forces or oscillations of the drive, reliable scanning is not ensured by this means.

An object of the present invention is to ensure reliable scanning of the tracks and a reliable track jump even in the case of eccentric optical media and in the case of forces acting externally on the actuator.

According to the invention, this object is achieved by means of a method according to independent Claim 1 and an apparatus according to independent Claim 15. Preferred developments are specified in the associated dependent claims.

According to the present invention, the relative speed between scanning beam and disc is reduced in order to prolong the average residence duration near a track and thus to enable position information items that may be present, e.g. so-called headers, to be detected. This means that even in the case of eccentric discs, despite the high relative speed of the tracks with regard to the scanning beam, it is possible to read information items, e.g. position information items from the header, even when the track regulating circuit is open.

According to the present invention, the relative speed between pre-impressed tracks and the scanning beam is reduced by detecting firstly the number and preferably also the direction of the tracks crossed. This information is used in a regulating loop for position regulation of the actuator, as a result of which the actuator at least roughly follows the course of the tracks.

The present invention will now be explained in more detail with reference to the accompanying drawings, in which:
- Fig. 1: shows a circuit diagram of a first embodiment of the present invention;
- Fig. 2: shows a circuit diagram of a second embodiment of the present invention;
- Fig. 3: shows a circuit diagram of a third embodiment of the present invention; and
- Fig. 4: shows a circuit diagram of a fourth embodiment of the present invention.

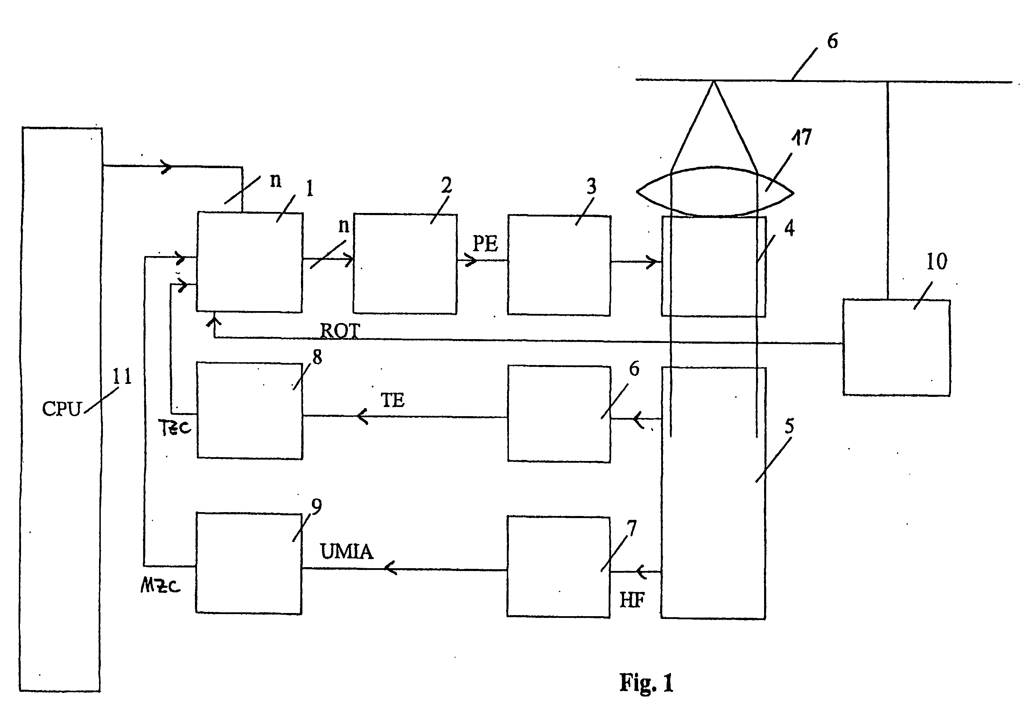

The number and direction of the tracks crossed are detected in the apparatus illustrated symbolically in Figure 1, which apparatus represents a first embodiment. For this purpose, counting information is fed to a position counter 1. The counter reading of the position counter 1 is converted into an analogue signal with the aid of a D/A converter 2. Proceeding from an initial counter reading X and a corresponding output voltage Ux, the number and the direction of the tracks crossed starting from an initial instant can be detected with the aid of these two blocks.

A counting signal and a direction signal from the optical scanner 5 are made available for the position counter 1. In the case of CD, CD-ROM, CD-VIDEO, CD-R, CD-RW, DVD-ROM, DVD-R and DVD-RW, e.g. the signals TZC (track zero cross) and MZC (mirror zero cross) can be obtained from the track error signal (TE) and the mirror signal (UMIA). In this case, the track error signal TE can be formed with the aid of various track error forming methods in a track error generator 6 (e.g. push-pull, DPP, DPD, 3-beam, ...), which receives its input signal from the optical scanner 5. TZC is generated by comparison of the track error signal with zero with the aid of a comparator in a TZC generator 8.

The MZC signal is formed in a similar way. For this purpose, use is made of the property whereby the HF modulation, determined by the bright/dark contrast of the information layer, is greatest on track centres. This is governed by the information items, the so-called pits, written or pre-impressed on the storage layer. If the scanning beam impinges on such a pit, then it is reflected only weakly, with the result that a low reflection factor occurs there, whereas no pits are present in the centre between the tracks, the resulting HF modulation is low and, accordingly, a higher reflection factor is present. In order to detect this, the lower envelope is formed from the DC-coupled HF signal from the optical scanner 5 in a mirror signal generator 7 by peak value detection. The output signal of this peak value detector is applied to a comparator in an MZC generator 9 either directly or after passing through a low-pass filter, which comparator compares the low-pass-filtered signal with a threshold value and generates the binarized signal MZC.

As an alternative, the MZC signal can be formed with the aid of a low-pass filter and a comparator. The summation signal of selected detectors is subjected to low-pass filtering in order to filter the high-frequency signal components of the stored information items (pits) and to obtain a signal proportional to the average reflectivity. This voltage signal is often called mirror signal UMIA. In the case of the disc formats mentioned above, the average reflectivity differs between the written tracks (typically groove, series of pits) and the regions in between (typically land), as already explained above. A comparator then compares the mirror signal with a threshold value and thus generates the signal MZC.

The signal TZC typically has its zero crossing in the centre of groove or land, while the signal MZC typically has its zero crossing exactly at the edges between groove and land or between land and groove. This relationship results in a phase of ±90° between the signals TZC and MZC. The sign of the phase relationship results from the direction of movement of the scanning beam relative to the track and thus determines the counting direction of the counter 1. Owing to the phase relationship of ±90° between the signals, which of the two signals is used as direction signal and which as counting signal is generally not relevant to the counting function as such. All that is important for the regulating function, which will be described in its entirety below, is that a negative feedback results in the closed regulating circuit with the connections chosen.

In the case of DVD-RAM discs, it is not possible to generate the signal MZC in the manner described above. When using recording media of this type, it is not possible, when the tracks are crossed in the radial direction, to obtain information about the direction in which the light beam crosses the tracks of the recording medium. The so-called mirror signal MZC which is generated for this purpose in the case of conventional data carriers and detects a region free of data markings, the so-called mirror area, has double the frequency in the case of land-and-groove recording media. Owing to the data markings present there, track and intermediate track have a lower reflectivity than the region which is situated between track and intermediate track and in which the mirror signal then has its maximum. A comparison of the phase angle of the track error signal and of the mirror signal for the purpose of direction identification is thus no longer meaningful on account of the doubled frequency of the mirror signal. However, possible ways of generating a signal corresponding to the MZC signal, and of enabling direction identification, even in the case of data carriers of this type are being sought. For the sake of simplicity, a signal of this type is also referred to as MZC signal hereinafter.

What is common to the previously known methods is that the direction of the movement and also the number of tracks crossed are ascertained by means of a track counting logic unit.

In the simplest case, the track counting logic unit comprises an up/down counter as position counter 1, which is typically controlled by a counting input and a direction input. However, it is better to use a state logic unit for track counting, which counts only specific meaningful sequences of the input signals TZC and MZC, since the two signals, in practice, are noisy in the vicinity of their respective zero crossings and the comparators can generate incorrect pulses.

In optical data storage technology, regulating arrangements have usually been used heretofore for focusing and for tracking. The optical scanner 5 used for reading or writing contains the requisite optical unit, which images a light pencil reflected from the optical storage medium 6 onto a photodetector. The illumination of the photodetector is dependent on the track position and focusing of the scanning beam with regard to the optical storage medium 6. Since the disc motor 10 and the optical storage medium 6 are not mechanically perfect and may have vertical wobble and also eccentricity, one of the optical components, e.g. an objective lens 17, is mounted in the actuator 4, which is embodied e.g. as a two-axis actuating element. This actuator 4 can influence the position of the objective lens 17 in such a way as to enable focusing and also tracking. To that end, typically two regulating loops are required, which are described briefly below:

A focus regulating loop (not illustrated) is required in order to adjust the scanning beam emerging from an optical scanner 5 on an optical storage medium 6 in such a way that the said optical storage medium 6 is scanned with the smallest possible beam diameter and the information held on it is reproduced in the best possible manner. By contrast, the track regulation has the task of keeping the scanning beam as well as possible in the centre of a pre-impressed track, in which case the track may be spiral or concentric with respect to a central hole in the case of a disc storage medium, whereas the tracks may also lie parallel and be straight in the case of a memory card. A so-called track error signal TE is used as the actual signal for such track regulation; the desired signal is zero. The actual signal, for its part, is calculated by the combination of signals output by a photodetector. Known track error forming methods are push-pull (PP), differential push-pull (DPP), 3-beam, differential phase detection (DPD). This track error signal TE is fed as actual signal to the track regulator 3, which, for its part, has the task of minimizing the track error, i.e. keeping it near the desired value of zero.

A particular problem in disc storage media 6 is the accuracy of the centre hole with respect to the centre of the spirally arranged tracks and also the precision of the true running of the disc turntable. The ever decreasing track spacings of new optical storage media in conjunction with ever higher rotational speeds mean that, on account of the mechanical precision not increasing to the same extent, the number of tracks crossed on account of this eccentricity becomes greater and greater and, at the same time, this number of tracks is crossed in ever shorter time intervals owing to the rising rotational speeds. This means that the relative speed transversely with respect to the track direction between a stationary observer (e.g. scanning beam) and the tracks of a disc increases with the rotational speed, and, in addition, the number of tracks crossed increases, for a given eccentricity, owing to the ever smaller track spacing.

If an initially stationary scanning beam is then intended to be locked into a track moving past it, this means that the scanning beam must be controlled in such a way that, in a very short time interval, the relative speed between this scanning beam and the destination track of the eccentrically mounted optical storage medium must be reduced and, at the same time, the deviation must be kept smaller than ± 0.5 track width. This requires the regulator, upon the closing of the regulation, to apply a voltage to the electromagnetic drive 4 of the objective lens 7 such that the said drive experiences an acceleration sufficient to reach the same speed as the track - moving relative to it - of the optical storage medium 6. As already mentioned above, owing to the smaller track spacings in conjunction with optical storage media 6 rotating ever faster, it is more and more difficult to reduce the relative speed between scanning beam and track to zero within ± 0.5 track.

By means of the position regulation according to the invention, it is ensured that the relative speed between scanning beam and track is reduced before the actual track regulator is activated. In other words, the deviation between the track illuminated by the scanning beam and a desired or destination track is kept as small as possible. Such position regulation is realized like traditional regulation as a closed regulating loop, the quantity to be regulated being the deviation between illuminated track and a desired track.

Position regulation with the aid of the abovementioned means has further functional blocks, which are described below and are shown in Figure 1.

The counter value of the position counter 1 is converted, as mentioned, by a digital/analogue converter 2 into a voltage PE whose value represents the deviation and whose sign represents the direction of the deviation. Such a voltage is in this case referred to as position error voltage PE.

Analogously to the use of the track error signal TE, the position error signal PE is fed to the regulator 3, which ensures that the value of the error signal becomes as small as possible. Accordingly, the regulator 3 adjusts the driving voltage of the actuator 4 in such a way that the objective lens 17 is moved in such a way that the scanning beam which it directs onto the optical storage medium 6 remains as near as possible to a predetermined desired track. If a track deviation by a few tracks occurs, then this position deviation is counted by the position counter 1, a corresponding error signal PE is generated and fed to the regulator 3, which, for its part, corrects the position of the objective lens 17 by suitable driving. The regulating loop is thus closed. Generally, the regulator 3 is designed in such a way that its transfer response together with the transfer response of the actuator 4 in the regulating loop corresponds to the stability criteria of a closed regulating circuit. These stability criteria are likewise dependent on the type and formation of the actual signal.

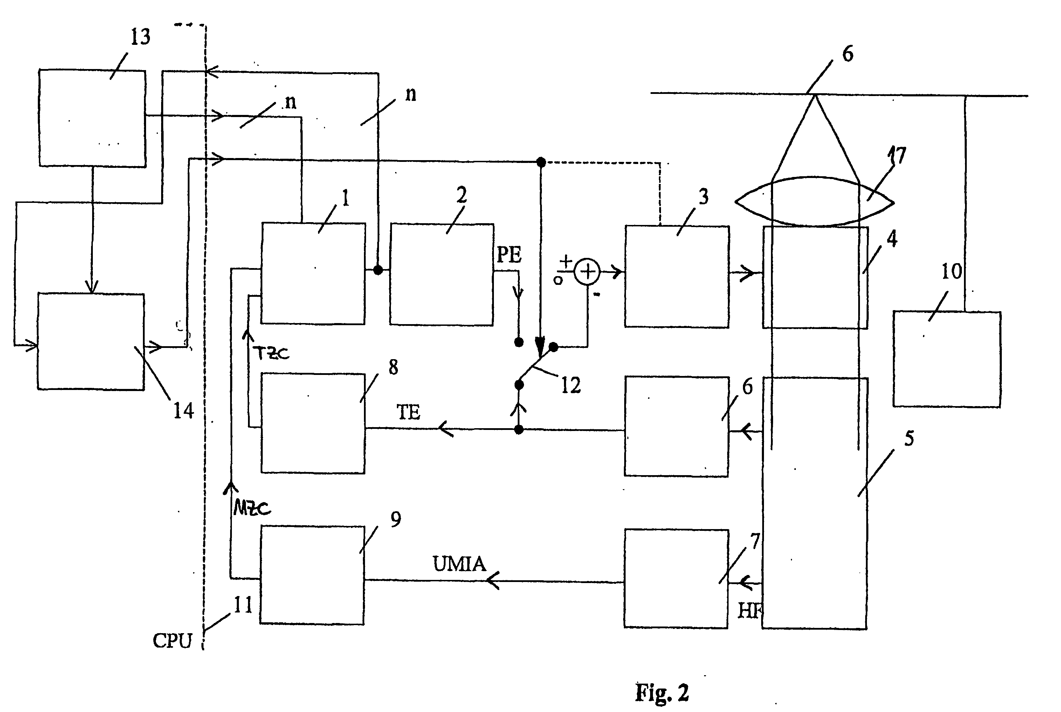

If an apparatus for reading from or writing to optical storage media 6 is intended to be able to perform both track regulation and position regulation of the scanning beam, then in the most general case this can be effected using two mutually independent regulating circuits. It is advantageous, however, to use as many functional blocks as possible in a shared manner. Thus, in accordance with the second embodiment illustrated in Figure 2, the regulator 3 will be used in a shared manner for both regulating circuits by means of a switch 12. In this case, it is advantageous to set different operating parameters of the regulator depending on the type of regulation or actual signal generation, in order to comply with the properties (gain and temporal behaviour) of this regulation. The switch 12 is activated by a control signal and applies either the track error signal TE or the position error signal PE to the regulator 3. If necessary, this control signal can likewise trigger a change in the operating parameters of the regulator in order to obtain an optimum regulating behaviour of the closed regulating circuit.

A typical requirement made of an apparatus for reading from or writing to optical storage media is to carry out a targeted track jump. By way of example, if a specific data area of the optical storage medium is intended to be read, a microcontroller CPU 11 calculates the distance between the currently scanned track and a destination track. The value of the track jump distance calculated in block 13 is fed to a comparator 14, as is the output value of the track counter. The track regulating circuit is opened and the output signal of the regulator becomes zero. The electromagnetic drive is driven by jump pulses by means of which the actuator 4 together with the objective lens 17 is moved in a predetermined direction towards the destination track. In this case, the length or amplitude of these jump pulses is calculated by the microcontroller 11, as are oppositely directed deceleration pulses in order to decelerate the actuator again near the destination track. Once the destination track has been reached, the track jump is ended by closing the track regulator by means of a track regulator activation, triggered by the comparator 14. A certain disadvantage of this method resides in the complex calculation of the jump pulses. This calculation is made more difficult by a possible eccentricity of the optical storage medium and also by external forces acting on the actuator, which influences the relative speed of the said actuator with regard to the tracks.

This complexity can be avoided when, as is indicated in Figures 1 to 4, the position regulation described above is advantageously used for a regulated track jump as well. Since, on account of its properties, the regulator 3 ensures that the voltage at its input is kept as far as possible at zero, an offset voltage in this regulation corresponds to a specific number of tracks proceeding from a start track. Thus, if the actuator 4 is on a specific starting track with the position regulation closed, then the setting of an offset value, in the counter reading of the counter 1, brings about an output voltage PE proportional thereto at the output of the D/A converter 2. The regulator 3 thereupon counteracts the deviation of the output voltage of the D/A converter 2 by corresponding driving of the actuator 4. The deviation of the output voltage becomes zero precisely when the actuator 4, on account of its driving, has crossed the number of tracks which was previously set as counter reading offset. Figure 2 shows a first variant of a track jump regulation. In this case, too, a microcontroller 11 calculates the distance between the currently scanned track and a destination track. After the calculation, the microcontroller 11 changes over from track regulation to position regulation (if appropriate with operating parameter changeover for the regulator 3). The value of the calculated track jump distance is thereupon transferred as offset value to the position counter 1. An output voltage PE - proportional to this track offset - of the D/A converter 2 causes the regulator 3 to output a control voltage to the actuator 4, which moves the latter in the direction of the jump destination. In accordance with the proximity to the jump destination, the counter reading of the position counter 1 decreases and the control voltage of the actuator 4 is likewise withdrawn. A suitable choice of the operating parameters for the regulator 3 enables the actuator 4 to arrive at the destination track without overshooting. Since the microcontroller 11 can pick off the value of the difference between jump destination and present position at the output of the position counter 1, it is able to reactivate the track regulation after a successful track jump. Since the microcontroller 11, as illustrated in Figure 2, knows the information about the remaining tracks to be skipped before the jump destination, the track jump can also be effected using a procedure in which the position counter 1 is not loaded with the full jump distance value, rather an interval-like track jumping is effected by repeated reloading. Control by way of the jump speed or track crossing speed of the actuator is also possible in this way. To that end, at the start of the jump, a plurality of mutually increasing values are loaded into the track counting logic unit, and the set values are then reduced towards the end of the jump. Equally, with the arrangement illustrated in Figure 2, it is possible to keep the track crossing speed desirably low by periodic reloading of the position counter 1 by the microcontroller 11. By way of example, the microcontroller 11 can reload the track counting logic unit in steps of one, the reloading period influencing the speed of the actuator. This is advantageous particularly in the case of correction jumps, in which the actuator is to be moved only by a few tracks.

In accordance with an alternative exemplary embodiment, the control logic unit, which performs the changeover between track regulating operation and position regulating operation, is concomitantly integrated into the position counter 1. The microcontroller 11 merely transfers the request and also the jump distance to the position counter 1, which, for its part, independently controls the track jump and passes to the microcontroller 11 an acknowledgement of whether the track jump has been concluded.

There is a source of errors in media whose track is pre-impressed like a spiral e.g. from the inside outwards. If the position regulation is switched on over a relatively long time, then the actuator 4 follows the outwardly winding tracks until its mechanical driving range has been reached or one of the signals MZC or TZC fails to appear on account of the increasing deflection. In order to counteract this, according to one variant of the invention, the counter reading is corrected by one per rotation of the disc 6. To that end, by way of example a rotation signal ROT provided by the disc motor 10 is used. The opposite holds true for oppositely impressed tracks, in which the spiral runs from the outside inwards. This correction may also be advantageous in the track jump regulation, if this operation lasts longer than one rotation.

The method of operation of the position regulation of the actuator position during a track jump with regard to the pre-impressed tracks of an optical storage medium is explained in more detail below.

Firstly, suppose that the track regulating circuit which keeps the scanning beam on the track centre of a track X is closed. If the position regulation is then switched on and the track regulation is switched off, prior to the activation thereof the position counter 1 is preset to zero (counter preset). As a result, the output voltage of the D/A converter 2 likewise becomes zero. This means that the subsequently activated position regulation will keep the scanning beam near track X. A rotation signal (rotation count correction) can be used, as described above, to avoid a "running away" of the actuator 4. The actuator 4 is thus moved back by one track once per rotation. Afterwards, a regulated track jump can be performed by setting an offset value (jump target preset) in the position counter 1. The track jump then proceeds in the manner described above. One advantage of the regulation is that, at the end of the jump, the actuator 4 is automatically stabilized and the relative speed of the scanning beam relative to the track becomes low, with the result that addressing information (e.g. header in a DVD-RAM) becomes readable with high probability even without closing the track regulating circuit.

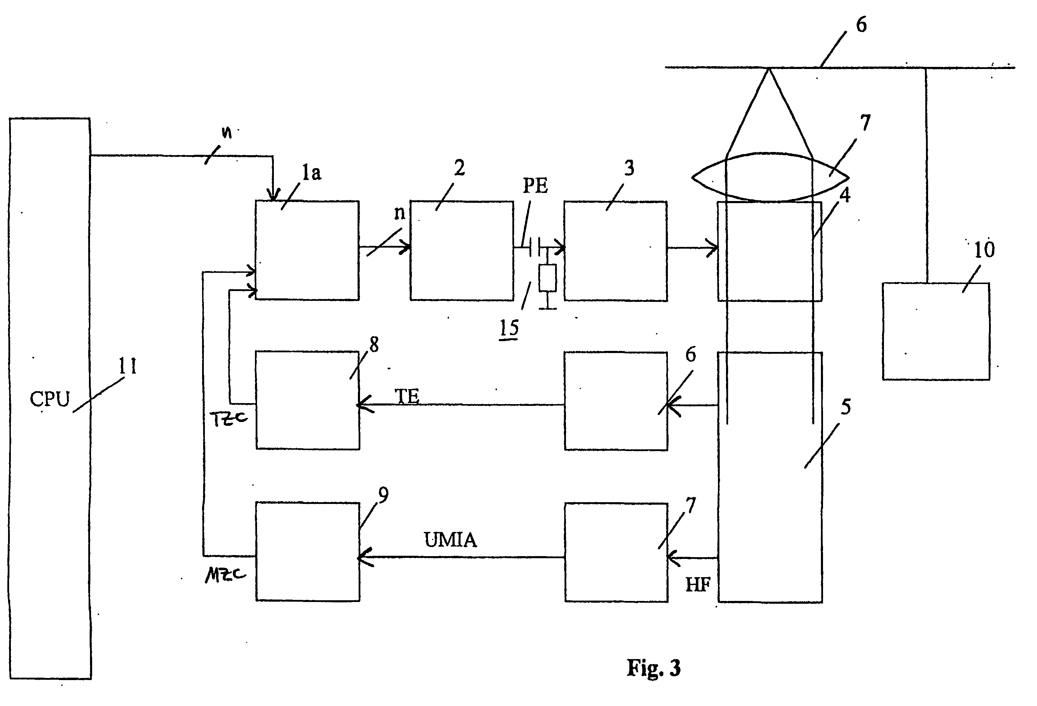

In a third exemplary embodiment in accordance with Figure 3, an AC coupling 15 is provided between D/A converter 2 and regulator 3. This AC coupling has the effect that the scanning beam essentially follows the eccentricity of the disc 11, but the absolute position is not held with respect to a predetermined track X. If, e.g. in the case of DC coupling, the position regulation is activated at an instant t at which the actuator 4 is currently in its mechanical rest position, then, owing to the outwardly running tracks, the actuator 4 is gradually deflected further and further in order to follow the absolute position of the track. This means that the actuator driving voltage increasingly deviates from zero and the counter reading becomes different from zero, i.e. a lasting regulating deviation results which becomes proportional to the driving voltage of the actuator 4. The increasing deflection of the actuator 4 can be counteracted either with the aid of a rotation signal (rotation count correction) in accordance with Figure 1 or by the AC coupling 15 in accordance with Figure 3.

When the AC coupling 15 is used, the position counter 1 can enter into a counting overflow after a large number of rotations.

Therefore, it is provided that the position counter is designed as a counter 1a with a limit which is limited at a specific maximum value, and thus avoids an excessively large deviation.

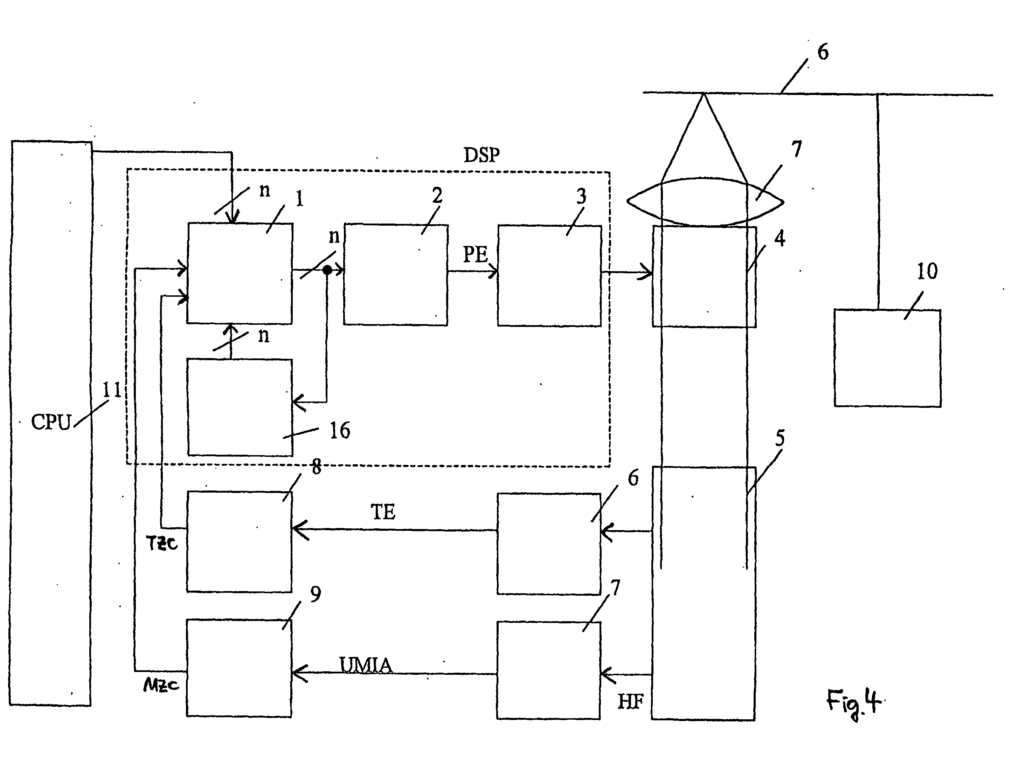

Another solution of the AC coupling 15, which solution avoids a counter overflow, consists, therefore, in accordance with Figure 4, in integrating it into the track counting logic unit or the position counter 1. To that end, an average value, in an average value generator 16, is taken over a specific number of position values and it is subtracted from the current counter value in each case. The number of averaged values in this case corresponds to the time constant of the AC coupling 15. An overflow of the position counter 1 can thus be avoided.

The solution described above is based on an analogue regulator 3 for driving the actuator 4. However, the invention also includes the use of a digital regulator (DSP) as regulator 3 and the transfer of the counter reading as actual value directly into the regulator 3. The averaging described above can also be integrated in a digital regulator.

Consequently, the invention results in a reduction of the relative speed between the scanning beam and the disc in order to prolong the average residence duration near a track and enable position information items that may be present, e.g. so-called headers, or other information items, to be detected early. During a track jump, the position of the actuator 4 is continuously controlled with regard to its jump destination even in the case of eccentric discs, ever smaller track spacings of high-density storage media and high scanning rotational speeds.

## Claims

1. Method for position regulation of a scanning beam relative to a track on a data carrier (6), having the steps of:
- determining the tracks crossed by the scanning beam and forming a count therefrom,
- regulating a relative position of the scanning beam on the basis of the count, and
- performing said regulation when approaching said track, when reaching said track and when departing from said track.

2. Method according to Claim 1, wherein determining the number of tracks crossed also includes determining the direction of track crossing.

3. Method according to Claim 1 or 2, wherein the count is generated on the basis of a binarized track error signal and a binarized mirror voltage signal.

4. Method according to Claim 1 or 2, wherein the count is generated on the basis of binarized signals which are derived by combination of photodetector signals and originate from mutually different scanning locations of the optical data carrier (6).

5. Method according to one of the preceding claims, wherein the count, after D/A conversion, preferably having been subjected to high-pass filtering, is fed to a regulator (3) for regulating the relative position.

6. Method according to one of the preceding claims, wherein the count is formed by a position counter (1) designed as an up/down counter.

7. Method according to one of the preceding claims, wherein the count is determined by a position counter (1) which contains a state logic unit which evaluates only allowed sequences of input signals as track crossing.

8. Method according to Claim 7, wherein the counter reading of the position counter (1) does not exceed a predetermined upper and lower limit value.

9. Method according to one of the preceding claims, wherein the count is corrected by a number - to be measured - of rotations of the data carrier (6), if the data carrier (6) has spiral tracks.

10. Method according to one of Claims 1 to 8, wherein an average count already determined is subtracted from the count, if the data carrier (6) has spiral tracks.

11. Method according to one of the preceding claims, wherein a changeover is made between the regulation of the relative position of the scanning beam relative to a predetermined track and the regulation to the centre of a predetermined track, and the respective regulation is preferably effected by a single regulator (3).

12. Method according to Claim 11, wherein at least one regulation parameter is altered at the same time as the changeover of the regulator (3).

13. Method according to one of the preceding claims, wherein a track jump is effected by the following steps:
- changeover to regulation of the relative position,
- loading of the position counter (1) with the count of the predetermined tracks to be skipped up to the destination track,
- ascertaining whether a counter reading of the position counter (1) has reached zero,
- switching back to track regulation when the destination track is reached.

14. Method according to one of Claims 1 to 12, wherein a track jump is effected by the following steps:
- loading of an intermediate register with the count of the predetermined tracks to be skipped up to the destination track,
- changeover to regulation of the relative position,
- loading of the position counter (1) with the count - stored in the intermediate register - of the predetermined tracks to be skipped up to the destination track,
- ascertaining whether a counter reading of the position counter (1) has reached zero,
- switching back to track regulation when the destination track is reached.

15. Apparatus for position regulation of a scanning beam relative to a track on a data carrier (6) having
- a scanning device (4, 5, 7) for scanning the tracks of the data carrier (6) by means of the scanning beam and forming a scanning signal,
- a track counting device (1) for determining the tracks crossed by the scanning beam using the scanning signal and forming a count, and
- a regulating device (3) for regulating a relative position of the scanning beam on the basis of the count
- wherein said position regulation is performed when approaching said track, when reaching said track and when departing from said track.

16. Apparatus according to Claim 15, wherein the direction of track crossing can also be determined using the track counting device (1).

17. Apparatus according to Claim 15 or 16, wherein a track error signal (TE) and a mirror voltage signal (UMIA) can be picked off from the scanning device (4, 5, 7), which signals can be binarized for the track counting device (1) by a binarization device (8, 9).

18. Apparatus according to Claim 15 or 16, wherein a plurality of signals originating from mutually different scanning locations of the optical data carrier (6) can be picked off from the scanning device (4, 5, 7), which signals can be combined for the track counting device (1) and can be binarized by a binarization device.

19. Apparatus according to one of the preceding claims, furthermore having a D/A converter device (2) for D/A conversion of the count from the track counting device (1), and preferably a high-pass filter (15) for filtering the output signal of the D/A converter device (2) prior to feeding into the regulating device (3).

20. Apparatus according to one of the preceding claims, wherein the track counting device (1) has an up/down counter.

21. Apparatus according to one of the preceding claims, wherein the track counting device (1) has a state logic unit which evaluates only allowed sequences of input signals as track crossing.

22. Apparatus according to Claim 21, wherein a limiter device limits the counter reading of the track counting device (1) to a predetermined upper and lower limit value.

23. Apparatus according to one of the preceding claims, wherein a correction device can be used to correct the count of the track counting device (1) by a number - to be measured - of rotations from a disc motor (10).

24. Apparatus according to one of Claims 15 to 22, wherein an average value generated by an average value generator (16) can be subtracted from the count.

25. Apparatus according to one of the preceding claims, wherein provision is made of a switch device (12) upstream of the regulating device (3) for choosing a track error signal (TE) from a track error generator (6) or a position error signal (PE) from the D/A converter device (2), in order to change over between the regulation of the relative position of the scanning beam relative to a predetermined track and the regulation to the centre of a predetermined track and to carry out the respective regulation preferably by means of a single regulating device (3).

26. Apparatus according to Claim 25, wherein at least one regulation parameter can be altered at the same time as the changeover of the regulating device (3).

27. Apparatus according to one of the preceding claims, wherein a track jump is controlled with the driving of the following units by a control unit (11) or the position counting logic unit:
- a changeover unit (12) for changing over between the regulating circuit for regulating the relative position and the regulating circuit for track following regulation,
- a loading unit for loading the position counting logic unit with one or more counts at tracks to be skipped, if appropriate from an intermediate register, and
- a determining unit for ascertaining whether a counter reading of the position counting logic unit has reached zero.

28. Apparatus for reading from and/or writing to optical recording media having an apparatus for position regulation according to one of Claims 15 to 27.

## Patentansprüche

1. Verfahren zur Positionsregelung eines Abtaststrahls relativ zu einer Spur auf einem Datenträger (6) mit den Schritten:
- Ermitteln der von dem Abtaststrahl gekreuzten Spuren und Bilden eines Zählwerts daraus,
- Regeln einer Relativposition des Abtaststrahls auf der Grundlage des Zählwerts und
- Durchführen der Regelung bei der Annäherung an die Spur, beim Erreichen der Spur und beim Verlassen der Spur.

2. Verfahren nach Anspruch 1, wobei das Ermitteln der Anzahl der gekreuzten Spuren auch das Ermitteln der Richtung des Spurkreuzens einschließt.

3. Verfahren nach Anspruch 1 oder 2, wobei der Zählwert auf der Grundlage eines binärisierten Spurfehlersignals und eines binärisierten Mirror- bzw. Spiegelspannungssignals erzeugt wird.

4. Verfahren nach Anspruch 1 oder 2, wobei der Zählwert auf der Grundlage von binärisierten Signalen, die durch Verknüpfung von Photodetektorsignalen abgeleitet werden und von voneinander unterschiedlichen Abtastorten des optischen Datenträgers (6) herrühren, erzeugt wird.

5. Verfahren nach einem der vorhergehenden Ansprüche, wobei der Zählwert nach einer D/A-Wandlung vorzugsweise hochpassgefiltert einem Regler (3) zum Regeln der Relativposition zugeführt wird.

6. Verfahren nach einem der vorhergehenden Ansprüche, wobei der Zählwert durch einen als Auf-/Abwärtszähler ausgebildeten Positionszähler (1) gebildet wird.

7. Verfahren nach einem der vorhergehenden Ansprüche, wobei der Zählwert durch einen Positionszähler (1) ermittelt wird, der eine Zustandslogik enthält, welche nur erlaubte Abfolgen von Eingangssignalen als Spurkreuzung auswertet.

8. Verfahren nach Anspruch 7, wobei der Zählerstand des Positionszählers (1) einen vorbestimmten oberen und unteren Grenzwert nicht überschreitet.

9. Verfahren nach einem der vorhergehenden Ansprüche, wobei der Zählwert um eine zu messende Anzahl an Umdrehungen des Datenträgers (6) korrigiert wird, wenn der Datenträger (6) spiralförmige Spuren aufweist.

10. Verfahren nach einem der Ansprüche 1 bis 8, wobei von dem Zählwert ein bereits ermittelter mittlerer Zählwert abgezogen wird, wenn der Datenträger (6) spiralförmige Spuren aufweist.

11. Verfahren nach einem der vorhergehenden Ansprüche, wobei zwischen dem Regeln der Relativposition des Abtaststrahls relativ zu einer vorbestimmten Spur und dem Regeln auf die Mitte einer vorbestimmten Spur umgeschaltet wird und das jeweilige Regeln vorzugsweise durch einen einzigen Regler (3) erfolgt.

12. Verfahren nach Anspruch 11, wobei gleichzeitig mit dem Umschalten des Reglers (3) mindestens ein Regelungsparameter verändert wird.

13. Verfahren nach einem der vorhergehenden Ansprüche, wobei ein Spursprung durch folgende Schritte erfolgt:
- Umschalten auf Regeln der Relativposition,
- Laden des Positionszählers (1) mit dem Zählwert der vorbestimmten zu überspringenden Spuren bis zur Zielspur,
- Feststellen, ob ein Zählerstand des Positionszählers (1) Null erreicht hat,
- Zurückschalten auf Spurregelung, wenn die Zielspur erreicht wird.

14. Verfahren nach einem der Ansprüche 1 bis 12, wobei ein Spursprung durch folgende Schritte erfolgt:
- Laden eines Zwischenregisters mit dem Zählwert der vorbestimmten zu überspringenden Spuren bis zur Zielspur,
- Umschalten auf Regeln der Relativposition,
- Laden des Positionszählers (1) mit dem im Zwischenregister abgelegten Zählwert der vorbestimmten zu überspringenden Spuren bis zur Zielspur,
- Feststellen, ob ein Zählerstand des Positionszählers (1) Null erreicht hat,
- Zurückschalten auf Spurregelung, wenn die Zielspur erreicht wird.

15. Vorrichtung zur Positionsregelung eines Abtaststrahls relativ zu einer Spur auf einem Datenträger (6) mit
- einer Abtasteinrichtung (4, 5, 7) zum Abtasten der Spuren des Datenträgers (6) mittels des Abtaststrahls und Bilden eines Abtastsignals,
- einer Spurzähleinrichtung (1) zum Ermitteln der von dem Abtaststrahl gekreuzten Spuren anhand des Abtastsignals und Bilden eines Zählwerts und
- einer Regeleinrichtung (3) zum Regeln einer Relativposition des Abtaststrahls auf der Grundlage des Zählwerts,
- wobei die Positionsregelung bei der Annäherung an die Spur, beim Erreichen der Spur und beim Verlassen der Spur durchgeführt wird.

16. Vorrichtung nach Anspruch 15, wobei mit der Spurzähleinrichtung (1) auch die Richtung des Spurkreuzens ermittelbar ist.

17. Vorrichtung nach Anspruch 15 oder 16, wobei von der Abtasteinrichtung (4, 5, 7) ein Spurfehlersignal (TE) und ein Spiegelspannungssignal (UMIA) abgreifbar sind, welche für die Spurzähleinrichtung (1) durch eine Binärisierungseinrichtung (8, 9) binärisierbar sind.

18. Vorrichtung nach Anspruch 15 oder 16, wobei von der Abtasteinrichtung (4, 5, 7) mehrere Signale, die von voneinander unterschiedlichen Abtastorten des optischen Datenträgers (6) herrühren, abgereifbar sind, welche für die Spurzähleinrichtung (1) verknüpfbar und durch eine Binärisierungseinrichtung binärisierbar sind.

19. Vorrichtung nach einem der vorhergehenden Ansprüche, mit weiterhin einer D/A-Wandlereinrichtung (2) zur D/A-Wandlung des Zählwerts von der Spurzähleinrichtung (1) und vorzugsweise einem Hochpassfilter (15) zum Filtern des Ausgangssignals der D/A-Wandlereinrichtung (2) vor Zufuhr in die Regeleinrichtung (3).

20. Vorrichtung nach einem der vorhergehenden Ansprüche, wobei die Spurzähleinrichtung (1) einen Auf-/Abwärtszähler aufweist.

21. Vorrichtung nach einem der vorhergehenden Ansprüche, wobei die Spurzähleinrichtung (1) eine Zustandslogik aufweist, welche nur erlaubte Abfolgen von Eingangssignalen als Spurkreuzung auswertet.

22. Vorrichtung nach Anspruch 21, wobei eine Begrenzereinrichtung den Zählerstand der Spurzähleinrichtung (1) auf einen vorbestimmten oberen und unteren Grenzwert beschränkt.

23. Vorrichtung nach einem der vorhergehenden Ansprüche, wobei durch eine Korrektureinrichtung der Zählwert der Spurzähleinrichtung (1) um eine zu messende Anzahl an Umdrehungen von einem Disc-Motor (10) korrigierbar ist.

24. Vorrichtung nach einem der Ansprüche 15 bis 22, wobei von dem Zählwert ein von einem Mittelwertgenerator (16) generierter Mittelwert abziehbar ist.

25. Vorrichtung nach einem der vorhergehenden Ansprüche, wobei eine Schaltereinrichtung (12) vor der Regeleinrichtung (3) zum Wählen eines Spurfehlersignals (TE) von einem Spurfehlergenerator (6) oder eines Positionsfehlersignals (PE) von der D/A-Wandlereinrichtung (2) vorgesehen ist, um zwischen dem Regeln der Relativposition des Abtaststrahls relativ zu einer vorbestimmten Spur und dem Regeln auf die Mitte einer vorbestimmten Spur umzuschalten und das jeweilige Regeln vorzugsweise durch eine einzige Regeleinrichtung (3) durchzuführen.

26. Vorrichtung nach Anspruch 25, wobei gleichzeitig mit dem Umschalten der Regeleinrichtung (3) mindestens ein Regelungsparameter veränderbar ist.

27. Vorrichtung nach einem der vorhergehenden Ansprüche, wobei ein Spursprung unter Ansteuerung folgender Einheiten durch eine Steuereinheit (11) oder die Positionszähllogik gesteuert wird:
- einer Umschalteinheit (12) zum Umschalten zwischen dem Regelkreis zur Regelung der Relativposition und dem Regelkreis zur Spurfolgeregelung,
- einer Ladeeinheit zum Laden der Positionszähllogik mit einem oder mehreren Zählwerten an zu überspringenden Spuren gegebenenfalls aus einem Zwischenregister und
- einer Bestimmungseinheit zum Feststellen, ob ein Zählerstand der Positionszähllogik Null erreicht hat.

28. Gerät zum Lesen und/oder Beschreiben optischer Aufzeichnungsträger mit einer Vorrichtung zur Positionsregelung nach einem der Ansprüche 15 bis 27.

## Revendications

1. Procédé de réglage de position d'un faisceau de balayage par rapport à une piste sur une porteuse de données (6), comprenant les étapes suivantes :
- détermination des pistes traversées par le faisceau de balayage et réalisation d'un comptage ;
- réglage d'une position relative du faisceau de balayage basée sur le comptage ; et
- réglage lors de l'approche de ladite piste, lorsque ladite piste est atteinte et lors du départ de ladite piste.

2. Procédé selon la revendication 1, où la détermination du nombre de pistes traversées inclut également la détermination de la direction de la traversée de piste.

3. Procédé selon la revendication 1 ou 2, où le comptage est généré sur la base d'un signal d'erreur de piste et d'un signal de tension miroir binarisé.

4. Procédé selon la revendication 1 ou 2, où le comptage est généré sur la base de signaux binarisés dérivés par combinaison de signaux de photodétecteur et provenant de plusieurs lieux de balayage mutuellement différents de la porteuse de données optique (6).

5. Procédé selon l'une des revendications précédentes, où le comptage, après conversion N/A et de préférence après passage dans le filtre passe-haut, est envoyé au régulateur (3) pour réglage de la position relative.

6. Procédé selon l'une des revendications précédentes, où le comptage est effectué par un compteur de position (1) conçu comme un compteur-décompteur.

7. Procédé selon l'une des revendications précédentes, où le comptage est déterminé par un compteur de position (1) contenant une unité logique d'état qui évalue uniquement les séquences autorisées des signaux d'entrée comme traversée de piste.

8. Procédé selon la revendication 7, où la position de compteur du compteur de position (1) ne dépasse pas une valeur limite inférieure ou supérieure prédéterminée.

9. Procédé selon l'une des revendications précédentes, où le comptage est corrigé par un nombre (à mesurer) de rotations de la porteuse de données (6), si la porteuse de données (6) comporte des pistes en forme de spirale.

10. Procédé selon les revendications 1 à 8, où un comptage moyen déjà déterminé est soustrait du comptage, si la porteuse de données (6) comporte des pistes en forme de spirale.

11. Procédé selon l'une des revendications précédentes, où un transfert est effectué entre le réglage de position relative du faisceau de balayage par rapport à une piste prédéterminée et le réglage au centre d'une piste prédéterminée, le réglage respectif étant effectué de préférence par un régulateur unique (3).

12. Procédé selon la revendication 11, où au moins un paramètre de réglage est modifié lors du transfert du régulateur (3).

13. Procédé selon l'une des revendications précédentes, où un saut de piste est effectué selon les étapes suivantes :
- passage en réglage de position relative ;
- chargement dans le compteur de position (1) du comptage des pistes prédéterminées à sauter avant d'atteindre la piste de destination ;
- vérification que la position de compteur du compteur de position (1) a atteint zéro ;
- retour à un réglage de piste lorsque la piste de destination est atteinte.

14. Procédé selon la revendication 1 ou 2, où un saut de piste est effectué selon les étapes suivantes :
- chargement dans un registre intermédiaire du comptage des pistes prédéterminées à sauter avant d'atteindre la piste de destination ;
- passage en réglage de position relative ;
- chargement dans le compteur de position (1) du comptage (stocké dans le registre intermédiaire) des pistes prédéterminées à sauter avant d'atteindre la piste de destination ;
- vérification que la position de compteur du compteur de position (1) a atteint zéro ;
- retour à un réglage de piste lorsque la piste de destination est atteinte.

15. Appareil de réglage de position d'un faisceau de balayage par rapport à une piste sur une porteuse de données (6) comprenant :
- un dispositif de balayage (4, 5, 7) pour le balayage des pistes de la porteuse de données (6) à l'aide du faisceau de balayage et formant un signal de balayage ;
- un dispositif de comptage de pistes (1) pour déterminer les pistes traversées par le faisceau de balayage à l'aide du signal de balayage et réalisant un comptage ; et
- un dispositif de réglage (3) pour régler une position relative du faisceau de balayage basé sur le comptage ;
- où ledit réglage de position est effectué lors de l'approche de ladite piste, lorsque ladite piste est atteinte et lors du départ de ladite piste.

16. Appareil selon la revendication 15, où la direction de la traversée de piste peut également être déterminée à l'aide du dispositif de comptage de pistes (1).

17. Appareil selon la revendication 15 ou 16, où un signal d'erreur de piste (TE) et un signal de tension miroir (UMIA) peut être obtenu par le dispositif de balayage (4, 5, 7) dont les signaux peuvent être binarisés pour le dispositif de comptage de pistes (1) par un dispositif de binarisation (8, 9).

18. Appareil selon la revendication 15 ou 16, où plusieurs signaux provenant de plusieurs lieux de balayage mutuellement différents de la porteuse de données optique (6) peuvent être obtenus par le dispositif de balayage (4, 5, 7), dont les signaux peuvent être combinés pour le dispositif de comptage de pistes (1) et binarisés par le dispositif de binarisation.

19. Appareil selon l'une des revendications précédentes, également comprenant un dispositif de conversion N/A (2) pour la conversion N/A du comptage à partir du dispositif de comptage (1) et de préférence un filtre passe-haut (15) pour le filtrage du signal de sortie du dispositif de conversion N/A (2) avant l'envoi au dispositif de réglage (3).

20. Appareil selon l'une des revendications précédentes, où le dispositif de comptage de pistes (1) comprend un compteur-décompteur.

21. Appareil selon l'une des revendications précédentes, où le dispositif de comptage de pistes (1) comprend une unité logique d'état qui évalue uniquement les séquences autorisées des signaux d'entrée comme traversée de piste.

22. Appareil selon la revendication 21, où un dispositif limiteur limite la position de compteur du dispositif de comptage de pistes (1) à une valeur limite supérieure ou inférieure prédéterminée.

23. Appareil selon l'une des revendications précédentes, où un dispositif de correction peut être utilisé pour corriger le comptage du dispositif de comptage de pistes (1) par un nombre (à mesurer) de rotations d'un moteur de disque (10).

24. Appareil selon l'une des revendications 15 à 22, où une valeur moyenne générée par un générateur de valeur moyenne (16) peut être soustraite du comptage.

25. Appareil selon l'une des revendications précédentes, comprenant un dispositif de commutation (12) en amont du dispositif de réglage (3) permettant de choisir un signal d'erreur de piste (TE) provenant d'un générateur d'erreur de piste (6) ou un signal d'erreur de position (PE) provenant du dispositif de conversion N/A (2) afin de passer du réglage de la position relative du faisceau de balayage par rapport à une piste prédéterminée, au réglage au centre d'une piste prédéterminée et d'effectuer le réglage respectif de préférence à l'aide d'un dispositif de réglage unique (3).

26. Appareil selon la revendication 25, où au moins un paramètre de réglage est modifié lors du transfert vers le dispositif de réglage (3).

27. Appareil selon l'une des revendications précédentes; où un saut de piste est commandé par le déplacement des unités suivantes via une unité de commande (11) ou l'unité logique de comptage de position :
- une unité de transfert (12) permettant de passer du circuit de réglage pour régler la position relative au circuit de réglage pour régler le suivi de piste ;
- une unité de chargement permettant de charger l'unité logique de comptage de position avec un ou plusieurs comptages au niveau des pistes à sauter, si approprié à partir d'un registre intermédiaire ; et
- une unité de détermination pour vérifier si la position de compteur de l'unité logique du compteur de position a atteint zéro.

28. Appareil permettant de lire à partir du et/ou d'écrire sur un support d'enregistrement optique comportant un appareil pour le réglage de position selon l'une des revendications 15 à 27.
